# EUROPEAN PATENT SPECIFICATION

(11) **EP 2 958 649 B1**
(45) Date of publication and mention of the grant of the patent: **03.06.2026**
(21) Application number: 13875884.2
(22) Date of filing: 14.03.2013
(51) Int. Cl.: B01D 3/14

(54) **SEPARATION PROCESSES USING DIVIDED COLUMNS**
TRENNVERFAHREN UNTER VERWENDUNG GETEILTER SÄULEN
PROCÉDÉS DE SÉPARATION UTILISANT DES COLONNES DIVISÉES

(30) Priority: 21.02.2013 US 201361767434 P
(43) Date of publication of application: 30.12.2015
(73) Proprietor: Sulzer Management AG, 8401 Winterthur (CH)
(72) Inventor: BHARGAVA, Manish, Katy, TX 77494 (US); NELSON, Cole, Cypress, TX 77433 (US)
(74) Representative: IPS Irsch AG
(86) International application number: PCT/US2013/031591
(87) International publication number: WO 2014/130066

(56) References cited:
- EP-A1- 2 266 674
- EP-A2- 2 555 842
- EP-A2- 2 555 842
- CN-A- 102 190 559
- US-A- 5 335 504
- US-A- 5 709 780
- US-A- 6 077 985
- US-A1- 2005 199 482
- US-A1- 2011 167 868
- US-A1- 2011 308 930
- US-B1- 6 291 734
- US-B1- 6 472 578
- US-B1- 6 568 208
- US-B2- 8 197 677

## Description

### CROSS-REFERENCES TO RELATED APPLICATIONS

### FIELD OF THE INVENTION

The present invention is related to the use of a top dividing wall distillation column as a depropanizer column that recovers C₃ components from fuel gas comprising in its top section a vertical dividing wall that splits the top section of the column into two halves, namely one defining the feed side therein, which functions as pre-fractionation section, that is located on one side of the dividing wall and one defining the product side therein on the opposite side of the dividing wall, wherein the top dividing wall distillation column further comprises at the side being opposite to the divided section a bottom portion defining a main section therein, two condensers and a side reboiler being used in the prefractionation section of distillation column. Thus, the present invention provides an innovative technique wherein the two column system is combined into a single column. The light components are concentrated on the prefractionation side (feed side) or prefractionation section, respectively, of the column, where they are removed as an overhead top product. The middle boiling components are removed as an overhead product on the opposite side of dividing wall. For the same product specifications, top dividing wall column depropanizer (TDWC) requires substantially lower capital and operating cost than a conventional two-column system.

### BACKGROUND OF THE INVENTION

Distillation and absorption are very common separation techniques used in the process industries. Both techniques require a large amount of energy due to the heating and cooling involved in the process. These techniques were mostly designed more than a decade ago when the economic, political and societal scenarios were different. It would be desirable to reduce the energy cost in the interest of economy as well as society.

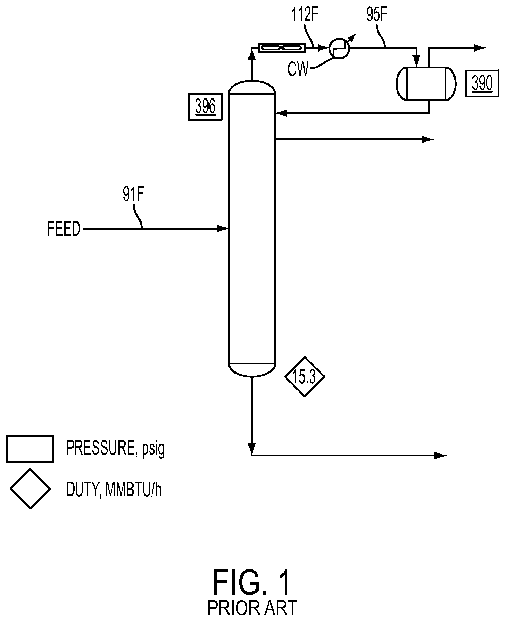

There are complex separation configurations available that offer substantial reduction in energy and capital expenditures. These options include dividing wall columns. Dividing wall columns are normally used in distillation processes. FIG. 1 represents the prior art. The column operates at 2,69 MPa (390 psig) with an overhead temperature of 35°C (95°F). This conventional depropanizer aims at separating C₂/C₃ components as an overhead product and C₄/C₄₊ components as the bottoms product of the column.

However, the prior art possesses several disadvantages. It is not possible to condense the lighter components in the overhead product at 2,41 MPa (350 psig) and using cooling water as the overhead cooling media. The overhead system has a partial condenser. C₂ and lighter components (used as fuel gas) are drawn as the vapor product from the partial condenser. C₃ product is the liquid stream from the partial condenser. A considerable amount of C₃ components are lost to the fuel gas vapor stream. The loss of C₃ components can be prevented by decreasing the overhead temperature (e.g., by using refrigeration) or increasing the column pressure. However, this increases the operating cost of the column. Although the prior art systems offers a sharp split between C₃ and C₃₊, the recoveries of these components is low as they are lost in the fuel gas vapor stream.

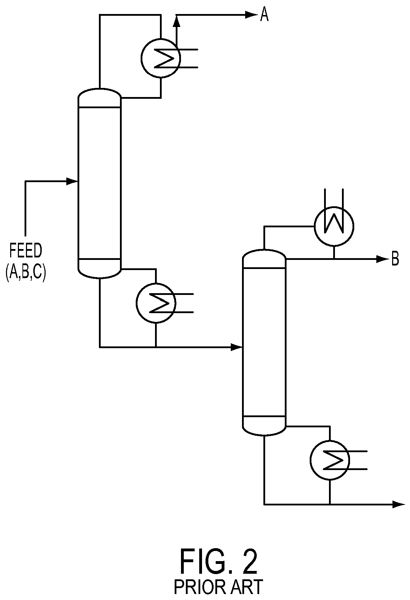

FIG. 2 represents alternative prior art. This process uses a two column design. The first column is a reboiled absorber which aims at separating non-condensed products from the feed. The non condensables (used as fuel gas) are the overhead vapor product from this column. The bottoms from the first column are fed to the second column. C₃ product is withdrawn as an overhead product in the second column and C₄/ C₄₊ is withdrawn as the bottoms product. Although, this prior art system offers high C₃/C₃₊ recoveries. The disadvantage is higher capital expenditure and higher energy consumption.

EP 2 555 842 discloses a process for separating 1,2,4-trimethylbenzene by fractional distillation of a mixture that contains C₉ or C₉₊-aromatic hydrocarbons making use of a distillation column, which is divided by a wall extending from the top to the bottom of the distillation column into two halves.

US 6 077 985 A relates to a process for separating a feed stream comprising ethylene, ethane and C₃₊ making use of a distillation column, the bottom portion of which being divided into two halves by a wall extending from the bottom of the distillation column vertically upwardly, but ending in distance to the top of the distillation column so that the top portion of the distillation column is undivided.

US 5 335 504 A describes a process for recovering carbon dioxide from a mixture of light hydrocarbons making use of a distillation column, the middle portion of which being divided into two halves by a wall extending vertically upwardly in the distillation column, wherein the top and bottom portions of the distillation column are undivided.

EP 2 266 674 A1 discloses the distillative separation of at least one feed mixture in a distillation column, which is divided by a wall extending from the top to the bottom of the distillation column into two halves.

US 8 197 677 B2 relates to a process for separating a plurality of naphtha components making use of a distillation column, the middle portion of which being divided into two halves by a wall extending vertically upwardly in the distillation column, wherein the top and bottom portions of the distillation column are undivided.

Thus, it would be desirable to have a process using a system that overcomes the disadvantages of the prior art systems.

### SUMMARY OF THE INVENTION

the present invention is directed to the use of a top dividing wall distillation column as a depropanizer column that recovers C₃ components from fuel gas in accordance with claim 1, i.e. to a use, wherein two different unit operations (absorption and distillation) take place on either side of a top dividing wall column.

### BRIEF DESCRIPTION OF THE DRAWINGS

FIG. 1 represents a separation process in accordance with the prior art;
FIG. 2 represents a dual column separation process in accordance with the prior art; and
FIG. 3 represents a process scheme in accordance with an embodiment of the present invention.

### DETAILED DESCRIPTION OF EXEMPLARY EMBODIMENTS

An embodiment of the invention is directed to the use of a top dividing wall distillation column as a depropanizer column that recovers C₃ components from fuel gas, wherein two different unit operations (absorption and distillation) take place on either side of the top dividing wall column.

The innovation is explained through an example, a conventional depropanizing system

The claimed invention provides an innovative technique wherein for the use a two column system used in a distillation set up is combined into a single column. In certain embodiments of the invention, the light components are concentrated on the prefractionation side (feed side) or prefractionation section, respectively, of the column, where they are removed as an overhead top product. The middle boiling components are removed as an overhead product on the opposite side of dividing wall. Thus, for the same product specifications, the top divided wall column of the claimed invention requires substantially lower capital and operating cost than a conventional two-column system.

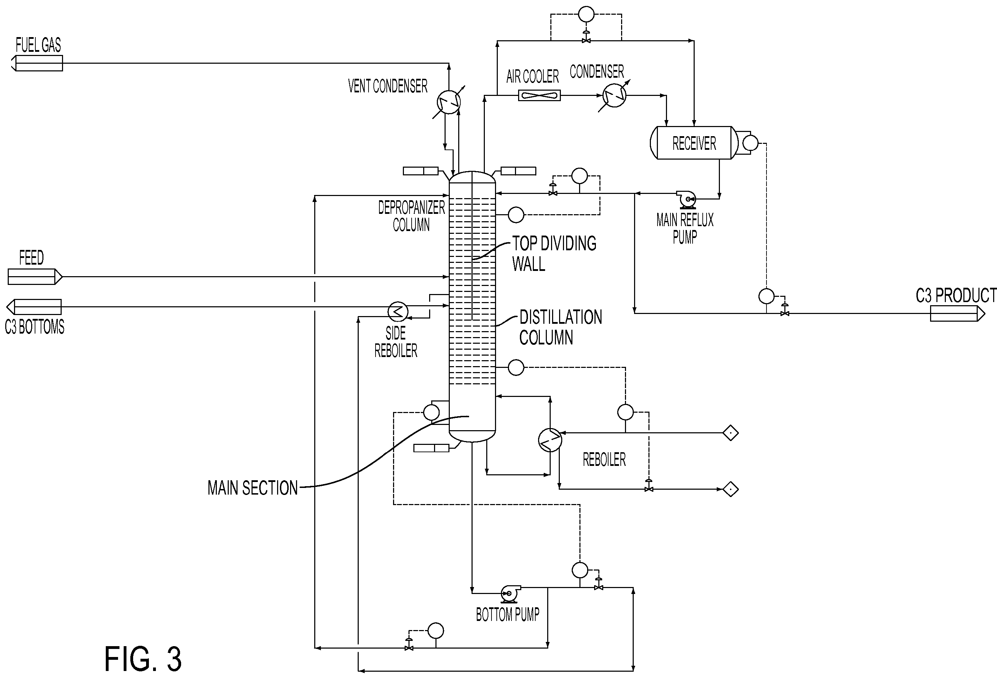

A working representation of the claimed invention is set forth in FIG. 3. A distillation column having a top dividing wall is shown. The top divided column has a feed side that is located on one side of the dividing wall and a product side on the opposite side of the dividing wall. The bottom portion of the top divided column i.e., the opposite side of the top divided column is the main section.

In an embodiment of the invention, the process scheme of the use in accordance with the claimed invention is designed to separate C₂ (Non condensables), C₃ (intermediate component), C₃₊ (Heavies) in a single top divided column. The feed stream is first sent to the pre-fractionation side of the top divided column. The vertical dividing wall splits the top portion of the column into two halves. The feed side of the wall is called the pre-fractionation section or prefractionation section, respectively. The non-condensables (used as fuel gas) is removed as overhead vapor product from a vent condenser. In certain embodiments of the invention, the column overhead pressure is set at 2,41 MPa (350 psig) via a pressure controller on the overhead fuel gas product line. The section above the feed acts as an absorption section that us primarily used to minimize the loss of C₃ components. The pre-ractionation side or prefractionation section, respectively, has reflux coming from two sources: A liquid stream condensed from a vent condenser; and a heavy stream from a bottoms pump.

In an embodiment of the invention, the vapor from the overhead of the main section is condensed and cooled to 35°C (95°F) in air-cooled exchanger followed by the water-cooled condenser. The condenser outlet is collected in an overhead receiver. The C₃ light liquid is pumped out of the drum via reflux pumps. A portion of the light liquid is sent back to the column as reflux and the remainder is withdrawn as C₃ product.

In an embodiment of the invention, the operating pressure of the column is controlled by a pressure control loop installed on the non-condensable line going to the fuel gas header, while the pressure in the overhead received is controlled by a hot by-pass pressure control loop.

In an embodiment of the invention, the temperature in top section of the main column is controlled in cascade with the reflux flow control loop. This allows control over the quality of the C₃ product by suppressing the tendency of the heavier components from going to the top of the column.

In an embodiment of the invention, the reboiler connected to the main section is a thermosyphon steam reboiler that uses steam as heating medium. The heat input to the reboiler is regulated by controlling the steam flow cascaded to the column bottom tray temperature controller.

The C₃ bottom product is controlled by a level control loop in cascade with the bottom product flow rate.

## Claims

1. Use of a top dividing wall distillation column as a depropanizer column that recovers C3 components from fuel gas comprising in its top section a vertical dividing wall that splits the top section of the column into two halves, namely one defining the feed side therein, which functions as pre-fractionation section, that is located on one side of the dividing wall and one defining the product side therein on the opposite side of the dividing wall, wherein the top dividing wall distillation column further comprises at the side being opposite to the divided section a bottom portion defining a main section therein, two condensers and a side reboiler being used in the prefractionation section of distillation column.

2. The use of claim 1, wherein the two condensers are a partial condenser and a total condenser.

3. The use of claim 1 wherein the feed side of the top dividing wall distillation column is operable to act as a reboiled absorber to separate non condensables from C₃.

4. The use of claim 1 wherein the prefractionation section of the top dividing wall distillation column contains an absorption solvent.

5. The use of claim 1 wherein the heating medium of the side reboiler is the column bottoms.

## Patentansprüche

1. Verwendung einer oberen Trennwanddestillationskolonne als Entpropanisierungskolonne, die C3 -Komponenten aus Brenngas gewinnt, umfassend in ihrem oberen Abschnitt eine vertikale Trennwand, die den oberen Abschnitt der Kolonne in zwei Hälften teilt, nämlich eine, die darin die Zufuhrseite definiert, die als Vorfraktionierungsabschnitt dient, die sich auf einer Seite der Trennwand befindet, und eine, die darin die Produktseite auf der gegenüberliegenden Seite der Trennwand definiert, wobei die obere Trennwanddestillationskolonne ferner auf der Seite, die dem geteilten Abschnitt gegenüberliegt, einen Bodenabschnitt, der darin einen Hauptabschnitt definiert, zwei Kondensatoren und einen Seitenverdampfer, der in dem Vorfraktionierungsabschnitt der Destillationskolonne verwendet wird, umfasst.

2. Verwendung nach Anspruch 1, wobei die zwei Kondensatoren ein Teilkondensator und ein Gesamtkondensator sind.

3. Verwendung nach Anspruch 1, wobei die Zufuhrseite der oberen Trennwanddestillationskolonne betreibbar ist, um als verdampfter Absorber zu wirken, um nicht-kondensierbare Stoffe von C₃ zu trennen.

4. Verwendung nach Anspruch 1, wobei der Vorfraktionierungsabschnitt der oberen Trennwanddestillationskolonne ein Absorptionslösungsmittel enthält.

5. Verwendung nach Anspruch 1, wobei das Heizmedium des Seitenverdampfers der Kolonnenboden ist.

## Revendications

1. Utilisation d'une colonne de distillation à paroi de séparation supérieure en tant que colonne de dépropanisation qui récupère des composants en C3 à partir de gaz combustible comprenant dans sa section supérieure une paroi de séparation verticale qui divise la section supérieure de la colonne en deux moitiés, à savoir l'une définissant le côté alimentation dans celle-ci, qui fonctionne en tant que section de pré-fractionnement, qui est située sur un côté de la paroi de séparation et l'une définissant le côté produit dans celle-ci sur le côté opposé de la paroi de séparation, dans laquelle la colonne de distillation à paroi de séparation supérieure comprend en outre sur le côté opposé à la section divisée une partie inférieure définissant une section principale dans celle-ci, deux condenseurs et un rebouilleur latéral étant utilisés dans la section de pré-fractionnement de la colonne de distillation.

2. Utilisation selon la revendication 1, dans laquelle les deux condenseurs sont un condenseur partiel et un condenseur total.

3. Utilisation selon la revendication 1, dans laquelle le côté alimentation de la colonne de distillation à paroi de séparation supérieure peut fonctionner pour agir en tant qu'absorbeur rebouilli pour séparer les non condensables du C₃.

4. Utilisation selon la revendication 1, dans laquelle la section de pré-fractionnement de la colonne de distillation à paroi de séparation supérieure contient un solvant d'absorption.

5. Utilisation selon la revendication 1, dans laquelle le milieu chauffant du rebouilleur latéral est les fonds de colonne.
